# EUROPÄISCHE PATENTANMELDUNG

(11) **EP 2 243 896 A2**
(43) Veröffentlichungstag der Anmeldung: **27.10.2010**
(21) Anmeldenummer: 10159437.2
(22) Anmeldetag: 09.04.2010
(51) Int. Cl.: E04F 15/02, E04F 21/06, C09J 5/00

(54) **Flächiges, flexibles Gebinde sowie Verfahren und Vorrichtung zum Herstellen eines flächigen, flexiblen Gebindes**

(30) Priorität: 16.04.2009 EP 09158008
(71) Anmelder: Robatech AG, 5630 Muri (CH)
(72) Erfinder: Meyer, Marcel, 8915 Hausen am Albis (CH)
(74) Vertreter: OK pat AG

(57) **Zusammenfassung**

Verfahren und Vorrichtung zum Herstellen eines flächigen, flexiblen Gebindes (20) aus mehreren flächigen Stücken (10). Die Vorrichtung umfasst einen Klebstoffauftragskopf (30) der über eine Bearbeitungszone (1) bewegbar ist. Der Klebstoffauftragskopf (30) weist mehrere erste Düsenöffnungen (31) und mehrere zweite Düsenöffnungen (32) auf, wobei die ersten Düsenöffnungen (31) je eine größere Breite haben als die zweiten Düsenöffnungen (32). Der Klebstoffauftragskopf (30) ist mit den Düsenöffnungen (31, 32) in einer solidarischen Bewegung in einer Bewegungsrichtung (B) über die Bearbeitungszone (1) bewegbar. Es kommt eine getaktete Steuerung (50) zu Einsatz. Mit dieser Steuerung (50) werden jeweils die ersten Düsenöffnungen (31) separat von den zweiten Düsenöffnungen (32) mit Klebstoff getaktet beaufschlagt, damit die Düsenöffnungen (31, 32) unterschiedlich breite Klebstofftapes (21.1, 21.2) im Flächenauftrag abgeben.

## Beschreibung

Die Erfindung betrifft flächige, flexible Gebinde sowie ein Verfahren und eine Vorrichtung zum Herstellen eines flächigen, flexiblen Gebindes. Insbesondere geht es um Fliesen- und Mosaikgebinde mit rückseitiger Tragstruktur.

Es wird die Priorität der europäischen Patentanmeldung EP 09 158 008.4 beansprucht, die am 16.4.2009 eingereicht wurde.

### Hintergrund der Erfindung, Stand der Technik

Das Verlegen von Fliesen oder Mosaiksteinen mit Mörtel bzw. Klebemörtel ist verhältnismäßig umständlich und zeitraubend. Es ist daher bereits bekannt, zur erleichterten Verlegung von Fliesen oder Mosaiksteinen diese einzeln auf einem selbstklebenden Vlies anzuordnen, so dass die so erzeugte Fliesen- oder Mosaiktafel - nach dem Abziehen einer Schutzabdeckung der Vliesrückseite - als Ganzes auf einer Wand verlegt werden kann.

Aus der Offenlegungsschrift DE 1937331 ist seit weit mehr als 30 Jahren ein Ansatz bekannt, die Fliesen mit einzelnen Vliesstreifen miteinander zu einer Fliesentafel zu verbinden. Es ist ein Nachteil dieses Vorschlags, dass trotz der Verwendung einzelner Vliesstreifen ein Grossteil der Rückseiten der Fliesen mit Vlies und Klebstoff, der notwendig ist um die Streifen mit den Fliesen zu verbinden, bedeckt ist. Das reduziert die Haftwirkung des Fliesenklebers oder - mörtels.

Seit einiger Zeit gibt es auch Lösungen, die statt eines Vlieses eine Netz- oder Gitterstruktur zu verwenden, um die einzelnen Fliesen oder Mosaiksteine zu einem größeren Gebinde zusammen zu fassen.

Gemäß der publizierten europäischen Patentanmeldung EP 1586722 A1, wird vorgeschlagen einen Klebstoff zum Verbinden der Fliesen zu verwenden. Zu diesem Zweck werden Klebstoffflächen (vorzugsweise in einer schmalen länglichen Form) in einzelnen Längs- und Querbahnen auf die Rückseiten der Fliesen aufgetragen. Dadurch entsteht eine netzartige Struktur. Nach dem Aushärten dient diese netzartige Struktur als Tragstruktur für die Fliesen einer Fliesentafel. Es wird als ein wesentlicher Nachteil dieser Lösung angesehen, dass die Klebstoffkosten relativ hoch sind. Daher führt dieser Ansatz zu Kosten für Fliesentafeln, die höher sind als bei Fliesen, die auf einem vorgefertigten Netz aufgeklebt sind. Außerdem hat sich gezeigt, dass an den Punkten, wo die Längs- und Querbahnen sich schneiden, die Tragstruktur eine größere Dicke hat als an anderen Stellen. Das führt zu Problemen beim Einbetten der Fliesentafel in Fliesenmörtel oder -klebstoff. Weiterhin hat sich gezeigt, dass der verwendete Klebstoff zwar gut im Mörtel haftet, dass aber unter Umständen einzelne Fliesen herausbrechen können. Das kann daran liegen, dass ein Teil der Fliesenrückseite mit sich kreuzenden Klebstoffbahnen belegt ist. Außerdem ist die Fertigung der Fliesentafeln zeitaufwendig, weil mehrere Verfahrensschritte notwendig sind, um die Klebstoffbahnen aufzutragen.

Deshalb stellt sich die Aufgabe, ein entsprechendes Verfahren zu schaffen, das ermöglicht in wenigen Schritten flächige, flexible Gebinde aus mehreren flächigen Stücken zu fertigen, wobei der Verbrauch an Klebstoff reduziert werden soll, um so die Kosten zu reduzieren.

Außerdem stellt sich die Aufgabe, entsprechend gefertigte Gebinde anzubieten und eine Vorrichtung zu schaffen, welche eine einfache Herstellung der Gebinde nach dem erfindungsgemässen Verfahren ermöglicht.

### Zusammenfassung der Erfindung

Die Aufgabe wird gelöst durch ein Verfahren nach Anspruch 1, eine Vorrichtung nach Anspruch 8 sowie ein Gebinde nach Anspruch 11.

In den Unteransprüchen sind weitere vorteilhafte Ausgestaltungsformen der Erfindung aufgeführt.

Gemäss Erfindung dienen mehrere erste Klebstofftapes und mehrere zweite Klebstofftapes zusammen mit mehreren flächigen Stücken als ein Gebinde. Die Klebstofftapes sind Teil eines Tragmittels, das die flächigen Stücke verbindet.

Erfindung eignet sich insbesondere für das Herstellen vorgefertigter Fliesen- und Mosaikgebinde, die später beim Einbau einfach und sicher verlegt werden können. Die Erfindung lässt sich auch auf Spiegeltafeln (hier Spiegelgebinde genannt) und andere Gebinde anwenden.

Es kann sich um handelsübliche Fliesen und Mosaiksteine handeln. Es können aber auch Glasmosaiksteine, Spiegelmosaiksteine oder -fliesen und andere flächige Stücke aus Metall, Holz- oder anderen Materialien eingesetzt werden.

Die Erfindung hat den Vorteil, dass zum Beispiel im Vergleich zu der in der europäischen Patentanmeldung EP 1586722 gezeigten Lösung mehr als ein Drittel weniger Klebstoff notwendig ist. Außerdem werden Überhöhungen des Klebstoffs vermieden, die sich ergeben, wenn zwei Klebstoffflächen sich kreuzen. Weiterhin geht die Herstellung deutlich schneller, da durch den erfindungsgemässen Flächenauftrag weniger Schritte notwendig sind. Diese Vorteile sind von großer Bedeutung, da es in der Branche um sehr große Stückzahlen und daher auch um große Klebstoffmengen geht.

Besonders bevorzugt ist eine Ausführungsform, bei welcher ein Flächenauftrag erfolgt. Dieser Flächenauftrag erfolgt so, dass die Klebstoffflächen nicht zwischen die flächigen Stücke eines Gebindes laufen, da die abgegebene Klebstoffmenge und die Relativbewegung genau kontrolliert werden.

### Abbildungen

Im Folgenden werden weitere Einzelheiten und Vorteile der Erfindung anhand von Ausführungsbeispielen und teilweise mit Bezug auf die Zeichnung ausführlich beschrieben. Alle Figuren sind schematisiert und nicht maßstäblich, und entsprechende konstruktive Elemente sind in den verschiedenen Figuren mit gleichen Bezugszeichen versehen, auch wenn sie im Einzelnen unterschiedlich gestaltet sind. Es zeigen:
- **Fig. 1**: eine schematische Draufsicht einer ersten Ausführungsform der Erfindung;
- **Fig. 2A-2C**: verschiedene Abbildungen einer ersten Ausführungsform eines erfindungsgemässen Gebindes;
- **Fig. 3**: eine Ausführungsform einer Auftragevorrichtung, gemäß Erfindung, in schematischer Ansicht;
- **Fig. 4**: eine weitere Ausführungsform der Erfindung in Seitenansicht;
- **Fig. 5**: eine weitere Ausführungsform der Erfindung in Seitenansicht;
- **Fig. 6**: eine Ansicht einer zweiten Ausführungsform eines erfindungsgemässen Gebindes;
- **Fig. 7**: eine Ansicht einer dritten Ausführungsform eines erfindungsgemässen Gebindes;
- **Fig. 8**: eine perspektivische Ansicht eines erfindungsgemässen Klebstoffauftragskopfes.

### Detaillierte Beschreibung der Ausführungsbeispiele

Im Folgenden wird das Prinzip der Erfindung anhand einer ersten Ausführungsform beschrieben.

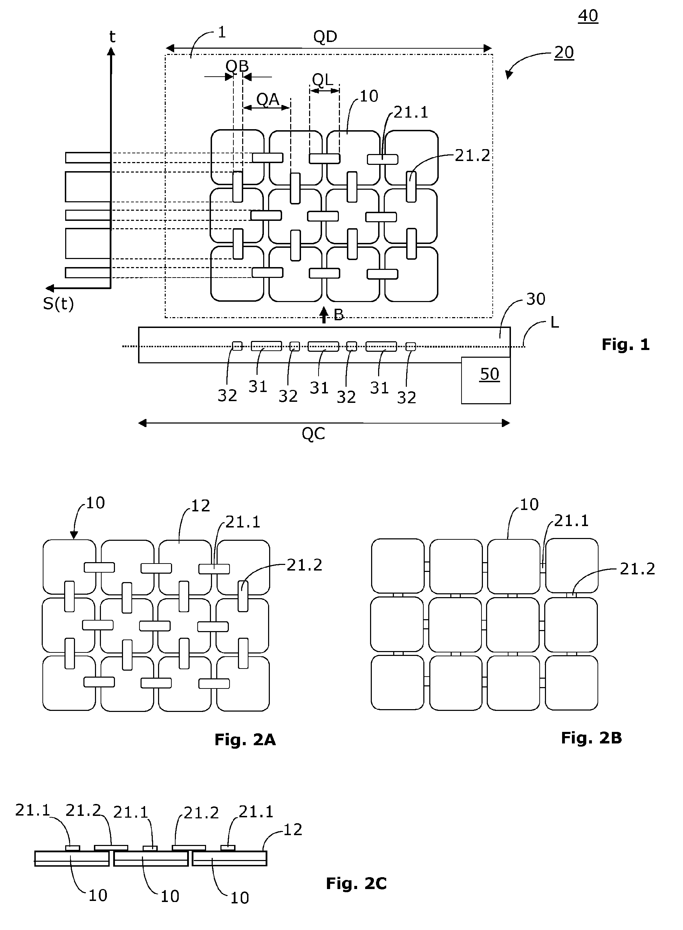

Ein Teil einer ersten erfindungsgemässen Vorrichtung 40 ist in Fig. 1 gezeigt. Es ist eine Draufsicht einer Bearbeitungszone 1 der Vorrichtung 40 gezeigt. Im Bereich der Bearbeitungszone 1 sind hier zwölf flächige Stücke 10 (z.B. Mosaiksteine) in Reihen und Spalten angeordnet. Diese Art der Anordnung wird hier als (regelmäßige) Gebindeanordnung bezeichnet.

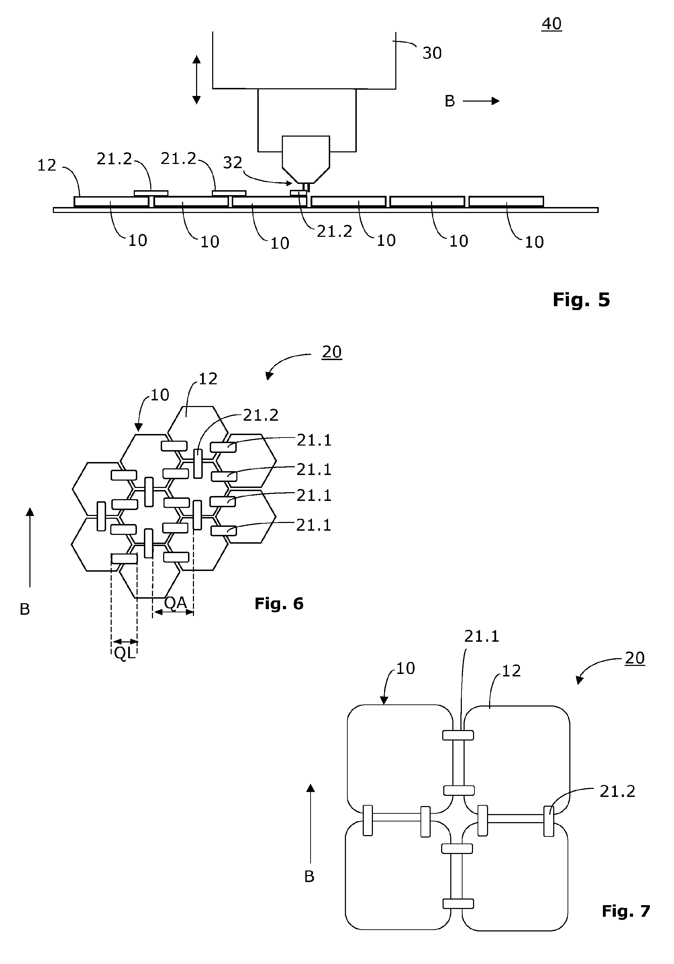

Es sei an dieser Stelle erwähnt, dass je nach Form, Regelmäßigkeit und Größe der flächigen Stücke 10 auch eine andere (regelmäßige) Gebindeanordnung gewählt werden kann. In Fig. 1 ist eine Gebindeanordnung mit quadratischen flächigen Stücken 10 gezeigt. In Fig. 6 ist als weiteres Beispiel eine Gebindeanordnung mit sechseckigen flächigen Stücken 10 gezeigt.

Die Vorrichtung 40 umfasst einen Klebstoffauftragskopf 30, der hier als "Querbalken" dargestellt ist, der eine Querausdehnung QC hat, die mindestens der Querausdehnung QD der Bearbeitungszone 1 entspricht. Der Klebstoffauftragskopf 30 weist mehrere erste Düsenöffnungen 31 und mehrere zweite Düsenöffnungen 32 auf, die vorzugsweise alle in einer Reihe L (senkrecht zur Bewegungsrichtung B) angeordnet sind. Im gezeigten Beispiel sind drei erste Düsenöffnungen 31 und vier zweite Düsenöffnungen 32 vorgesehen. Die ersten Düsenöffnungen 31 haben je eine größere Breite als die zweiten Düsenöffnungen 32 (mit Breite ist hier die Ausdehnung in Richtung der Reihe L gemeint). Um dies in Fig. 1 zu verdeutlichen, sind jeweils nur die Umrisse der Düsenöffnungen 31, 32 angedeutet.

Der Klebstoffauftragskopf 30 wird mit den ersten und zweiten Düsenöffnungen 31, 32 in einer solidarischen Bewegung in einer Bewegungsrichtung B über die Bearbeitungszone 1 bewegt, oder die Bearbeitungszone 1 wird relativ zum Klebstoffauftragskopf 30 bewegt. Es kommt eine getaktete Steuerung 50 zum Einsatz. Diese Steuerung 50 ist in Fig. 1 schematisch angedeutet. Mittels der Steuerung 50 werden jeweils die ersten Düsenöffnungen 31 separat von den zweiten Düsenöffnungen 32 mit Klebstoff versorgt. Die Versorgung mit Klebstoff erfolgt in getakteter Form, damit die Düsenöffnungen 31, 32 kurze Klebstofftapes 21.1, 21.2 abgeben, während der Klebstoffauftragskopf 30 sich relativ zur Bearbeitungszone 1 bewegt. Die Taktung mittels der Steuerung 50 ist so ausgeführt, dass das getaktete Beaufschlagen der Düsenöffnungen 31, 32 mit Klebstoff mit der Relativbewegung in Bewegungsrichtung B synchronisiert ist. Umso schneller die Bewegung in Richtung B erfolgt, umso kürzer werden die entsprechenden Taktzeiten.

Bevorzugt ist eine Ausführungsform, bei welcher ein Transfermedium 43 oder das Gebinde 10 unter dem Klebstoffauftragskopf 30 hindurch bewegt wird.

Links neben der Fig. 1 ist ein typisches Steuersignal S(t) (in digitaler Darstellung) als Beispiel gezeigt, das von der Steuerung 50 ausgegeben werden kann, um die Düsenöffnungen 31 und 32 zu öffnen und schließen, während sich die Klebstoffauftragskopf 30 über die Bearbeitungszone 1 bewegt.

Es wird dann für den sogenannten Flächenauftrag die folgende Auftragssequenz durchlaufen, wie anhand der Darstellung in Fig. 1 erläutert:
1. Die drei ersten Düsenöffnungen 31 werden geöffnet und geben insgesamt drei Klebstofftapes 21.1 mit Querausdehnung QL ab (1. kurzer Rechteckpuls des Steuersignals S(t));
2. die drei ersten Düsenöffnungen 31 werden abgeschaltet;
3. nach einer kurzen Relativbewegung in Bewegungsrichtung B, werden die vier zweiten Düsenöffnungen 32 geöffnet und geben insgesamt vier Klebstofftapes 21.2 mit Querausdehnung QB ab (1. längerer Rechteckpuls des Steuersignals S(t));
4. die vier zweiten Düsenöffnungen 32 werden abgeschaltet;
5. nach einer kurzen Relativbewegung in Bewegungsrichtung B, werden die drei ersten Düsenöffnungen 31 geöffnet und geben insgesamt drei Klebstofftapes 21.1 mit Querausdehnung QL ab (2. kurzer Rechteckpuls des Steuersignals S(t));
6. die drei ersten Düsenöffnungen 31 werden abgeschaltet;
7. nach einer kurzen Relativbewegung in Bewegungsrichtung B, werden die vier zweiten Düsenöffnungen 32 geöffnet und geben insgesamt vier Klebstofftapes 21.2 mit Querausdehnung QB ab (2. längerer Rechteckpuls des Steuersignals S(t));
8. die vier zweiten Düsenöffnungen 32 werden abgeschaltet;
9. nach einer kurzen Relativbewegung in Bewegungsrichtung B, werden die drei ersten Düsenöffnungen 31 geöffnet und geben insgesamt drei Klebstofftapes 21.1 mit Querausdehnung QL ab (3. kurzer Rechteckpuls des Steuersignals S(t)).

Vorzugsweise erfolgt die Bewegung in Richtung B mit konstanter Geschwindigkeit. Es ist aber auch möglich die Bewegung beim Abgeben der Klebstofftapes 21.2, 21.2 langsamer zu bewegen oder ganz anzuhalten. Mit den modernen Steuerungen und den hochpräzisen dosierbaren Klebstoffmengen, kann jedoch der ganze Vorgang in einem, kontinuierlichen Bewegungsablauf mit konstanter Geschwindigkeit erfolgen. Die Bandgeschwindigkeit, mit welcher entweder der Klebstoffauftragskopf 30 über die Auftragszone 1 bewegt wird, oder mit welcher die Auftragszone 1 relativ zum Klebstoffauftragskopf 30 bewegt wird, kann ca. 1 - 200 m/min betragen. Bevorzugt wird eine Relativgeschwindigkeit von ca. 10m/min.

In den Figuren 2A bis 2C sind verschiedene Ansichten eines Gebindes 20 mit zwölf flächigen Stücken 10 gezeigt. Fig. 2A zeigt eine Unteransicht (die Rückseiten der flächigen Stücke 10 zeigen hier nach oben), Fig. 2B zeigt eine Draufsicht (die Sichtseiten der flächigen Stücke 10 zeigen hier nach oben) und Fig. 2C zeigt eine Seitenansicht.

Gemäß Erfindung werden die Klebstofftapes 21.1, 21.2 im sogenannten Flächenauftrag von dem Klebstoffauftragskopf 30 abgegeben. D.h., es werden in einem Durchlauf sowohl quer- als auch längsgerichtete Klebstofftapes 21.1, 21.2 erzeugt. Die am Rand eines Gebindes liegenden Stücke 10 tragen zwei oder drei Klebstofftapes 21.1, 21.2. Stücke 10, die in der Mitte des Gebindes liegen, haben je vier Klebstofftapes 21.1, 21.2.

Der Klebstoffauftragskopf 30 umfasst, wie angedeutet, mehrere erste Düsenöffnungen 31 und mehrere zweite Düsenöffnungen 32, wobei jede erste Düsenöffnung 31 eine größere Breite hat als jede zweite Düsenöffnung 32. Beim Flächenauftrag geben die ersten Düsenöffnungen 31 zeitgleich mehrere erste Klebstofftapes 21.1 ab, die senkrecht zur Bewegungsrichtung B angeordnet sind. Die zweiten Düsenöffnungen 32 geben anschließend zeitgleich mehrere zweite Klebstofftapes 21.2 ab, die parallel zur Bewegungsrichtung B angeordnet sind.

Die zweiten Klebstofftapes 21.2 liegen mit den ersten Klebstofftapes 21.1 in einer gemeinsamen Ebene (die parallel zur Ebene der Bearbeitungszone 1 liegt), wobei die ersten Klebstofftapes 21.1 einen gegenseitigen Querabstand QA haben, der größer ist als die Querlänge QL der zweiten Klebstofftapes 21.2. Diese Bedingung sollte möglichst erfüllt sein, damit es keine Kollision oder Überlappung der entsprechenden Düsenöffnungen 31, 32 gibt.

Es ist aber auch eine Ausführungsform möglich, bei der die ersten Düsenöffnungen 31 und die zweiten Düsenöffnungen 32 in zwei separaten, parallel zu einander verlaufenden Reihen angeordnet sind. In diesem Fall kann zum Beispiel die Querlänge QL der Klebstofftapes 21.1 größer sein als der Querabstand QA. Dies ist aber nur möglich, wenn der Abstand A zwischen den Düsenöffnungen und der Oberfläche, auf welche die Klebstofftapes 21.1, 21.2 abzugeben sind, so groß ist, das die Düsenöffnungen 31, 32 die Klebstofftapes 21.1, 21.2 nicht abstreifen. Im sogenannten Kontaktmodus, wo es bewusst zum Abstreifen der Klebstofftapes 21.1, 21.2 kommt, ist die Ausführungsform mit zweireihiger Anordnung der Düsenöffnungen 31, 32 nicht möglich.

In einer Ausführungsform werden, wie in Fig. 1 angedeutet, die ersten Klebstofftapes 21.1 und die zweiten Klebstofftapes 21.2 direkt auf die Rückseiten 12 der flächigen Stücke 10 abgegeben (dieser Ansatz wird als Direktauftrag bezeichnet). Damit dieser Vorgang funktioniert, müssen die flächigen Stücke 10 zu einem flächigen Gebinde 20 ausgelegt sein. Außerdem sollten die Rückseiten 12 möglichst alle in einer gemeinsamen Ebene liegen.

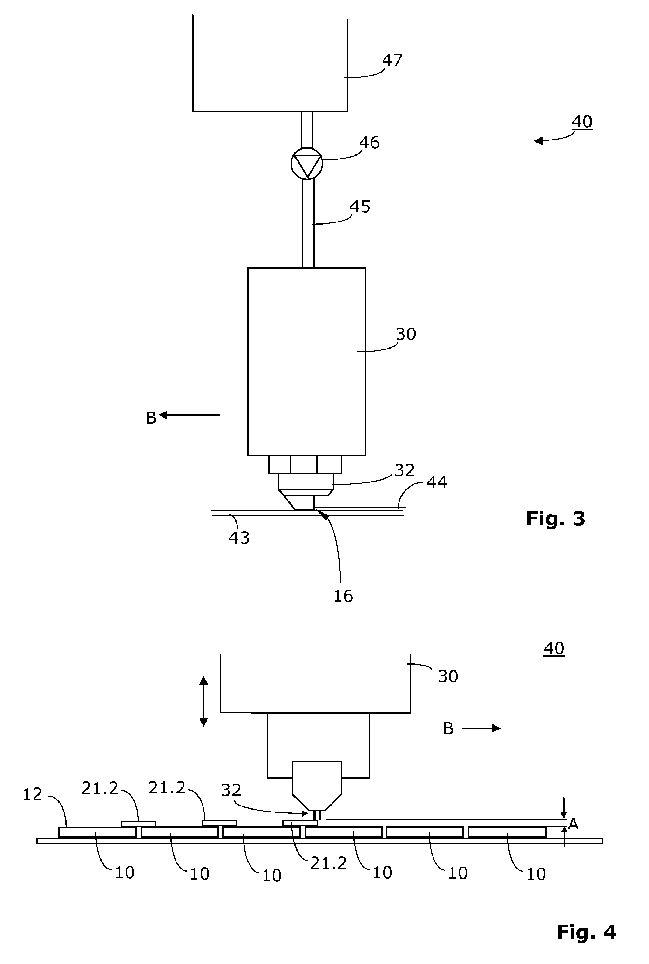

In einer anderen Ausführungsform werden die ersten Klebstofftapes 21.1 und die zweiten Klebstofftapes 21.2 auf ein flaches oder flächiges Transfermedium 43 (z.B. Silikonpapier) abgegeben (siehe Fig. 3), um dann in einem nachgelagerten Schritt auf die Rückseiten 12 der flächigen Stücke 10 übertragen zu werden, oder um die die flächigen Stücke 10 mit der Rückseite auf das Transfermedium 43 zu pressen. Damit dieser Vorgang funktioniert, müssen die flächigen Stücke 10 zu einem flächigen Gebinde 20 ausgelegt sein. Die Rückseiten 12 müssen nicht unbedingt alle in einer gemeinsamen Ebene liegen.

In Fig. 3 ist eine (Auftrage)Vorrichtung 40 in stark schematisierter Form gezeigt. Die Vorrichtung 40 umfasst einen Klebstoffauftragskopf 30 in dem sich z.B. mehrere Elektromagnete zum Öffnen und Schließen mehrerer Anker und Kanäle zum Durchtritt des Klebstoffs befinden. Der Klebstoffauftragskopf 30 steht z.B. über einen Schlauch 45 oder ein Rohr mit einer Pumpe 46 in Verbindung. Die Pumpe 46 fördert den aufzutragenden Klebstoff aus einem Behälter 47. Am unteren Ende des Klebstoffauftragskopfes 30 sitzen mehrere Düsenöffnungen 31, 32. In Fig. 3 ist nur eine der Düsenöffnungen 32 ansatzweise zu erkennen.

In dem gezeigten Beispiel wird der gesamte Klebstoffauftragskopf 30 mit den Düsenöffnungen 32, 32 in einer solidarischen Relativbewegung über eine Bearbeitungszone 1 geführt, wie durch den Pfeil B angedeutet. Die Düsenöffnungen 31, 32 geben den Klebstoff ab, der auf einem Transfermedium 43, oder auf der Rückseite 12 der flächigen Stücke 10 die Klebstofftapes 21.1, 21.2 bildet.

Es ist in Fig. 4 und Fig. 5 durch vertikale Doppelpfeile angedeutet, dass der Klebstoffauftragskopf 30 bei der Montage oder Einstellung der Vorrichtung 40 so ausgerichtet worden ist, dass die Düsenöffnungen 31, 32 in einem kleinen Abstand A in Bezug zu den Rückseiten 12 oder zu dem Transfermedium 43 stehen. Typischerweise beträgt dieser Abstand zwischen 0.1 und 5 mm, je nach gewünschter Dicke der Klebstofftapes 21.2, 21.2 und je nachdem, ob man im Kontaktmodus oder im kontaktlosen Modus arbeitet.

Im ersten Modus (kontaktloser Modus), der in Fig. 4 dargestellt ist, ergibt sich eine Art intermittierender Klebstoffauftrag dadurch, dass die Düsenöffnungen 32 in einem Abstand A so nah über den Rückseiten 12 der flächigen Stücke 10 angeordnet sind, dass kurze Klebstoffflächen 21.2 nacheinander abgegeben und abgelegt werden. In Fig. 4 ist ein Moment gezeigt, in dem eine Klebstofffläche 21.2 gerade beendet ist, d.h. es ist in diesem Moment das Ende eines längeren Rechteckpulses des Steuersignals S(t) erreicht.

Der zweite Modus (Kontaktmodus) ist in Fig. 5 dargestellt. In diesem Modus ergibt sich eine Art intermittierender Klebstoffauftrag dadurch, dass die Düsenöffnungen 32 in einem Abstand A, mit 0 < A < 10 mm, über die Rückseiten 12 der flächigen Stücke 10 streichen. Es werden kurze Klebstoffflächen 21.2 nacheinander abgegeben und abgelegt. Da sich der Klebstoffauftragskopf 30 nach rechts bewegt, wie durch den Pfeil B angedeutet, werden die Klebstoffflächen 21.2 jeweils durch die Berührung oder Annäherung der Düsenöffnungen 32 an die Rückseiten 12 abgestreift oder abgetrennt. In Fig. 5 entsteht gerade eine Klebstofffläche 21.2, d.h. es in diesem Moment befindet man sich ungefähr in der Mitte eines längeren Rechteckpulses des Steuersignals S(t).

Vorzugsweise ist der Abstand A des Klebstoffauftragskopfes 30, respektive der Düsenöffnungen 31, 32 zu den Rückseiten 12 der flächigen Stücke 10, respektive zu dem Transfermedium 43 so einstellbar, dass die Klebstofftapes 21.1, 21.2 in Form von einzelnen kurzen Rechtecken oder rechteckförmigen Streifen von den Auftragsdüsen 31, 32 abgelegt und abgestreift werden.

In Fig. 6 ist eine Gebindeanordnung mit sechseckigen flächigen Stücken 10 gezeigt. Auch hier gilt, dass die Querlänge QL der querliegenden Klebstofftapes 21.1 kürzer sein sollte als der Querabstand QA zwischen zwei benachbarten Klebstofftapes 21.2. In diesem Fall können die Klebstofftapes 21.1, 21.2 im Kontaktmodus erzeugt werden, wie beschrieben, und die Düsenöffnungen 31, 32 können in einer gemeinsamen Reihe L angeordnet sein. Die am Rand eines Gebindes liegenden Stücke 10 tragen drei oder vier Klebstofftapes 21.1, 21.2. Stücke 10, die in der Mitte des Gebindes liegen, haben je sechs Klebstofftapes 21.1, 21.2.

In Fig. 7 ist das Beispiel eines Gebindes gezeigt, bei dem die Stücke 10 deutlich größer sind als in Fig. 1. In diesem Fall können pro Stück 10 zum Beispiel je zwei querliegende Klebstofftapes 21.1 zu einem unmittelbar benachbarten anderen Stück 10 führen. Die am Rand eines Gebindes liegenden Stücke 10 tragen vier oder sechs Klebstofftapes 21.1, 21.2. Stücke 10, die in der Mitte des Gebindes liegen, haben je acht Klebstofftapes 21.1, 21.2.

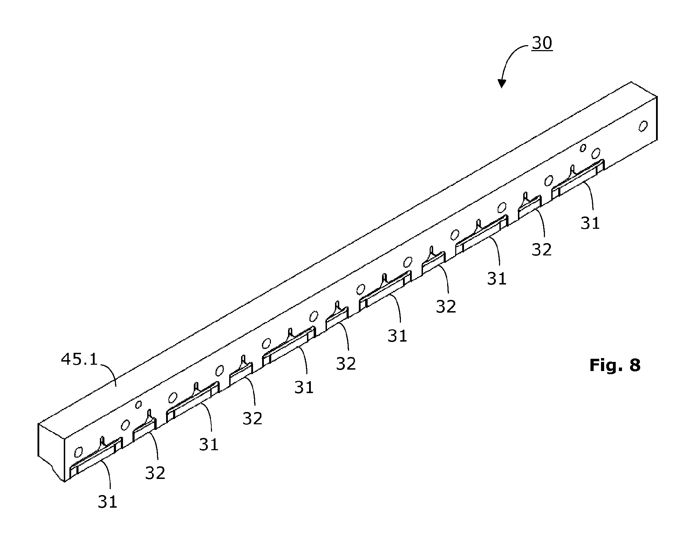

In Fig. 8 ist ein Teil eines Auftragskopfes 30 in perspektivischer Ansicht gezeigt. Entlang der unteren Kante sind die Düsenöffnungen 31 und 32 zu erkennen. Der gezeigte Auftragskopf 30 weist insgesamt fünf kurze (weniger breite) Düsenöffnungen 32 und sechs lange (breitere) Düsenöffnungen 31 auf. Alle Düsenöffnungen 31, 32 sind hier in einem gemeinsamen Düsenkörper 45.1 ausgebildet. Im Düsenkörper 45.1 sind vorzugsweise zwei separat durch eine Steuerung 50 mit Klebstoff versorgbare Klebstoffkanäle (nicht gezeigt) vorgesehen. Die Düsenöffnungen 31 werden über einen ersten Klebstoffkanal und die Düsenöffnungen 32 werden über einen zweiten Klebstoffkanal mit Klebstoff versorgt. Entweder ist jeder dieser Klebstoffkanäle komplett von der Steuerung 50 ansteuerbar (getaktet an- und abschaltbar), oder jede Düsenöffnung 31, 32 ist einzeln ansteuerbar (getaktet an- und abschaltbar).

Eine Vorrichtung 40 gemäß Erfindung kann mit verschiedenen Steuer- und Kontrollgliedern ausgestattet sein, um das erfindungsgemäße Verfahren überwachen zu können.

## Patentansprüche

1. Verfahren zum Herstellen eines flächigen, flexiblen Gebindes (20) aus mehreren flächigen Stücken (10), mit den folgenden Schritten:
- Bereitstellen eines flächigen Gebindes (20) mit mehreren flächigen Stücken (10), wobei die flächigen Stücke (10) mit ihrer Sichtseite (11) nach unten und ihrer gegenüberliegenden Rückseite (12) nach oben gerichtet sind,
- Aufbringen von Tragmitteln auf die Rückseite (12) der flächige Stücke (10),
**gekennzeichnet durch** die folgenden Schritte
- Erzeugen einer Relativbewegung eines Klebstoffauftragskopfes (30) mit mehreren Düsenöffnungen (31, 32) in einer Bewegungsrichtung (B) in Bezug zu dem flächige Gebinde (20), wobei
○ der Klebstoffauftragskopf (30) getaktet ist, um kurze Klebstofftapes (21.1, 21.2) abzugeben, und
○ eine erste Anzahl von ersten Klebstofftapes (21.1) parallel zu der Bewegungsrichtung (B) und eine zweite Anzahl von zweiten Klebstofftapes (21.2) senkrecht zu der Bewegungsrichtung (B) angeordnet sind.

2. Verfahren nach Anspruch 1, **dadurch gekennzeichnet, dass** die Klebstofftapes (21.1, 21.2) im Flächenauftrag von dem Klebstoffauftragskopf (30) abgegeben werden.

3. Verfahren nach Anspruch 2, **dadurch gekennzeichnet, dass** der Klebstoffauftragskopf (30) mehrere erste Düsenöffnungen (31) und mehrere zweite Düsenöffnungen (32) aufweist, wobei jede erste Düsenöffnung (31) eine größere Breite hat als jede zweite Düsenöffnung (32), wobei beim Flächenauftrag
- die ersten Düsenöffnungen (31) zeitgleich mehrere erste Klebstofftapes (21.1) abgeben, die senkrecht zur Bewegungsrichtung (B) angeordnet sind, und
- die zweiten Düsenöffnungen (32) anschließend zeitgleich mehrere zweite Klebstofftapes (21.2) abgeben, die parallel zur Bewegungsrichtung (B) angeordnet sind.

4. Verfahren nach einem der vorhergehenden Ansprüche, **dadurch gekennzeichnet, dass** die ersten Klebstofftapes (21.1) und die zweiten Klebstofftapes (21.2) in einer gemeinsamen Ebene liegen, wobei die ersten Klebstofftapes (21.1) einen gegenseitigen Querabstand (QA) haben, der größer ist als die Querlänge (QL) der zweiten Klebstofftapes (21.2).

5. Verfahren nach einem der vorhergehenden Ansprüche, **dadurch gekennzeichnet, dass** die ersten Klebstofftapes (21.1) und die zweiten Klebstofftapes (21.2) direkt auf die Rückseiten (12) der flächigen Stücke (10) abgegeben werden.

6. Verfahren nach einem der vorhergehenden Ansprüche 1 bis 4, **dadurch gekennzeichnet, dass** die ersten Klebstofftapes (21.1) und die zweiten Klebstofftapes (21.2) auf ein flaches Transfermedium (43) abgegeben werden, um dann
- entweder in einem nachgelagerten Schritt auf die Rückseiten der flächigen Stücke (10) übertragen werden, die zu einem flächigen Gebinde (20) ausgelegt sind,
oder um in einem nachgelagerten Schritt die flächigen Stücke (10) mit der Rückseite auf das Transfermedium (43) zu pressen.

7. Verfahren nach Anspruche 5 oder nach Anspruch 6, **dadurch gekennzeichnet, dass** der Abstand (A) des Klebstoffauftragskopfes (30) oder der Düsenöffnungen (31, 32) zu den Rückseiten der flächigen Stücke (10), respektive zu dem Transfermedium (43) so einstellbar ist, dass die Klebstofftapes (21.1, 21.2) in Form von einzelnen kurzen Klebstoffflächen von den Düsenöffnungen (31, 32) abgelegt und abgestreift werden.

8. Vorrichtung (40) zum Herstellen eines flächigen, flexiblen Gebindes (20) aus mehreren flächigen Stücken (10), mit einem Klebstoffauftragskopf (30) und einer Bearbeitungszone (1), **dadurch gekennzeichnet, dass**
- der Klebstoffauftragskopf (30) mehrere erste Düsenöffnungen (31) und mehrere zweite Düsenöffnungen (32) aufweist, wobei die ersten Düsenöffnungen (31) je eine größere Breite haben als die zweiten Düsenöffnungen (32),
- der Klebstoffauftragskopf (30) mit den ersten und zweiten Düsenöffnungen (31, 32) in einer solidarischen Relativbewegung in einer Bewegungsrichtung (B) in Bezug zu der Bearbeitungszone (1) bewegbar ist,
- eine getaktete Steuerung (50) Teil der Vorrichtung (40) ist, wobei
a. mittels der Steuerung (50) jeweils die ersten Düsenöffnungen (31) separat von den zweiten Düsenöffnungen (32) mit Klebstoff getaktet beaufschlagbar sind, damit die Düsenöffnungen (31, 32) unterschiedlich breite Klebstofftapes (21.1, 21.2) im Flächenauftrag abgeben, und
b. wobei die Relativbewegung in der Bewegungsrichtung (B) und das getaktete Beaufschlagen der Düsenöffnungen (31, 32) miteinander synchronisiert sind.

9. Vorrichtung nach Anspruch 8, **dadurch gekennzeichnet, dass** die Bearbeitungszone (1) zur Aufnahme mehrerer flächiger Stücke (10) zu einem flächigen Gebinde (20) ausgelegt ist, wobei die flächigen Stücke (10) mit ihrer Sichtseite (11) nach unten und ihrer gegenüberliegenden Rückseite (12) nach oben gerichtet sind.

10. Vorrichtung nach Anspruch 8, **dadurch gekennzeichnet, dass** die Bearbeitungszone (1) zur Aufnahme eines flachen Transfermediums (43) ausgelegt ist, auf dem die Klebstofftapes (21.1, 21.2) abgeben werden, bevor die Klebstofftapes (21.1, 21.2) entweder in einem nachgelagerten Schritt auf Rückseiten flächiger Stücke (10) übertragen werden, die zu einem flächigen Gebinde (20) ausgelegt sind, oder bevor in einem nachgelagerten Schritt die flächigen Stücke (10) mit der Rückseite auf das Transfermedium (43) gepresst werden.

11. Flächiges Gebinde (20), das mehrere flächige Stücke (10) und rückseitige Tragmittel umfasst, wobei die flächigen Stücke (10) zu einem flächigen Gebinde (20) angeordnet und ihre Sichtseiten (11) nach unten und ihre gegenüberliegenden Rückseiten (12) nach oben gerichtet sind,
**dadurch gekennzeichnet, dass**
- die Tragmittel eine erste Anzahl von ersten, einzeln angeordneten Klebstofftapes (21.1) und eine zweite Anzahl von zweiten, einzeln angeordneten Klebstofftapes (21.2) umfasst,
- wobei die ersten Klebstofftapes (21.1) senkrecht zu den zweiten Klebstofftapes (21.2) angeordnet sind,
- wobei ein erstes der flächigen Stücke (10) mit einem der ersten Klebstofftapes (21.1) mit einem ersten benachbarten flächigen Stück (10) verbunden ist, und
- wobei das erste flächige Stück (10) mit einem der zweiten Klebstofftapes (21.2) mit einem zweiten benachbarten flächigen Stück (10) verbunden ist.

12. Flächiges Gebinde (20) nach Anspruch 11, **dadurch gekennzeichnet, dass** es sich um
- eine Mosaiktafel,
- eine Fliesentafel, oder
- eine Spiegeltafel
handelt.

13. Flächiges Gebinde (20) nach Anspruch 11, **dadurch gekennzeichnet, dass** die Klebstofftapes (21.1, 21.2) PUR Klebstoff, vorzugsweise 1-Komponenten PUR Klebstoff, umfassen.
